# EUROPÄISCHE PATENTSCHRIFT

(11) **EP 4 259 417 B1**
(45) Veröffentlichungstag und Bekanntmachung des Hinweises auf die Patenterteilung: **31.12.2025**
(21) Anmeldenummer: 21820527.6
(22) Anmeldetag: 26.11.2021
(51) Int. Cl.: B29C 63/16, B29C 63/48

(54) **VERFAHREN ZUM AUFBRINGEN EINER KLEBEFOLIE**
METHOD FOR APPLYING AN ADHESIVE FILM
PROCÉDÉ D'APPLICATION D'UN FILM ADHÉSIF

(30) Priorität: 11.12.2020 DE 102020215764
(43) Veröffentlichungstag der Anmeldung: 18.10.2023
(73) Patentinhaber: PPG Advanced Surface Technologies, LLC, Columbus, OH 43212 (US)
(72) Erfinder: MENCEL, Daniel, 73733 Esslingen (DE); EISENLOHR, Jörg, 72202 Nagold (DE)
(74) Vertreter: f & e patent
(86) Internationale Anmeldenummer: PCT/EP2021/083075
(87) Internationale Veröffentlichungsnummer: WO 2022/122404

(56) Entgegenhaltungen:
- DE-A1- 102011 117 168
- DE-A1- 102017 223 768
- US-A1- 2007 270 062
- US-A1- 2017 114 250

## Beschreibung

Die vorliegende Erfindung betrifft ein Verfahren zum Aufbringen einer Klebefolie auf die Oberfläche eines Bauteils sowie eine für die Durchführung dieses Verfahrens geeignete Vorrichtung.

### ANWENDUNGSGEBIET UND STAND DER TECHNIK

Klebefolien werden in vielen Anwendungsbereichen eingesetzt, beispielsweise zu dekorativen Zwecken, etwa um ein Farbmuster auf eine Oberfläche zu übertragen, aus funktionalen Gründen, etwa als Schutz für lackierte Oberflächen, oder zur Aufbringung von Schriftzügen und ähnlichem. Vor allem finden Klebefolien in der Serienproduktion von Kraftfahrzeugen zunehmend Verwendung, dort beispielsweise als Steinschlagschutz, zum Aufbringen von Modellbezeichnungen und ähnlichem sowie natürlich zu Zwecken der optischen Gestaltung.

In der Regel ist der Aufwand, der etwa beim Aufbringen eines Farbmusters mittels einer Klebefolie entsteht, deutlich geringer als bei der Bildung solcher Muster in einem mehrstufigen Lackierprozess. Allerdings ist das Aufbringen von Klebefolien in einer Serienproduktion alles andere als trivial. Je größer die Klebefolie ist, desto schwieriger ist es, sie richtig auf der zu beklebenden Oberfläche zu positionieren und ohne Lufteinschlüsse und Faltenbildung zu verkleben. Eine Automatisierung dieser Prozesse ist bislang nicht gelungen. So wird die Applikation von Klebefolien beispielsweise in der Serienproduktion von Kraftfahrzeugen bis heute in der Regel manuell durchgeführt.

Aus der US 6197397 B1 sind Klebefolien bekannt, die mikrostrukturierte Kanäle innerhalb der Klebeschicht umfassen. Diese Kanäle sollen das Entweichen von Luft bei der Applikation der Klebefolien ermöglichen, um Lufteinschlüsse zu vermeiden und manuelle Nacharbeiten zur Entfernung derselben überflüssig zu machen. Sie sind für eine automatisierte Verarbeitung daher besser geeignet als klassische Klebefolien ohne die mikrostrukturierten Kanäle.

Allerdings sind solche Klebefolien sehr teuer. Weiterhin eignen sie sich aufgrund der mikrostrukturierten Klebeschicht weniger zur Bildung hochwertiger Oberflächen. In der Regel umfassen Klebefolien eine Trägerfolie, deren eine Seite mit einer Klebeschicht und deren andere Seite mit einer gegebenenfalls mehrlagigen Lackschicht bedeckt ist. Bei der Verwendung sehr dünner Trägerfolien hinterlässt die Mikrostruktur auch nach dem Aufkleben noch sichtbare Spuren. Die Verwendung besonders dicker Klebefolien ist grundsätzlich nicht gewünscht. Mit dicken Folien lässt sich das Problem zwar lösen. Diese tragen aber stark auf dem Substrat auf. Ohne Überlackierung mit einem Klarlack führt auch dies nicht zu zufriedenstellenden Ergebnissen.

Aus der WO 2020/148070 A1 sind ein Verfahren und ein Werkzeug zum Aufbringen einer Klebefolie auf die Oberfläche eines Werkstücks oder Bauteils bekannt, die die genannten Probleme adressieren. Hierzu wird eine Klebefolie mit einer Klebeschicht mit Hilfe eines automatisierten Systems zwischen der zu beklebenden Oberfläche und einer elastischen Membran positioniert. In Folge eines Unterdrucks, der zwischen der Membran und der Oberfläche angelegt wird, wölbt sich die Membran unter Ausbildung einer konvexen und einer konkaven Seite in Richtung der Oberfläche, bis sie mit der konvexen Seite voran die Oberfläche kontaktiert, so dass die Klebeschicht der Klebefolie von der Membran vollflächig an die Oberfläche gepresst wird. Der Grad der Wölbung der Membran wird hierbei durch eine Abstimmung der Druckverhältnisse auf beiden Seiten der Membran geregelt. So ist es beispielsweise möglich, die durch Anlegen des Unterdrucks erzeugte Wölbung der Membran durch einen entsprechenden Überdruck auf der Rückseite der Membran zu unterstützen.

Ein weiteres Verfahren zum Aufbringen einer Klebefolie ist in der DE102011117168A1 offenbart.

Problematisch bei diesen herkömmlichen Verfahren kann eine mangelhafte Haftung der Klebefolie an dem Werkstück oder Bauteil während des Prozesses der Aufbringung der Folie sein. Auch wenn diese mangelhafte Haftung möglicherweise nur in Teilbereichen der Kontaktfläche zwischen Klebefolie und Werkstück auftritt, kann dies zu unerwünschten Lufteinschlüssen und Blasenbildung führen.

Beim Aufbringen von Klebefolien, beispielsweise bei der Fertigung von Kraftfahrzeugen, ist es zum Aufbringen der Klebefolien häufig hilfreich, zunächst eine Benetzung der Klebeschicht der Klebefolie mit Wasser vorzunehmen, bevor die Klebefolie auf der zu beklebenden Oberfläche positioniert wird. Diese Benetzung erfolgt in der Regel von Hand, wobei die Dosierung des Wassers schwierig ist. Oftmals tritt dabei das Problem auf, dass zu viel Wasser aufgetragen wird, so dass anschließend nach dem Aufbringen der Klebefolie Wasser seitlich aus dem Kontaktbereich zwischen Klebefolie und Oberfläche austritt und dass es zu einem ungleichmäßigen Klebeergebnis kommt oder die Klebefolie verrutscht.

### AUFGABE UND LÖSUNG

Der nachfolgend beschriebenen Erfindung liegt demgegenüber die Aufgabe zu Grunde, ein verbessertes Verfahren und eine verbesserte Vorrichtung zum Aufbringen einer Klebefolie auf ein Bauteil bereitzustellen. Insbesondere sollen ein automatisierbares Verfahren und eine Vorrichtung zum Aufbringen von Klebefolien entwickelt werden, die sich in eine Serienproduktion, beispielsweise in eine zur Produktion von Kraftfahrzeugen vorgesehene Fertigungsstraße, integrieren lassen.

Zur Lösung dieser Aufgabe schlägt die Erfindung ein Verfahren mit den in Anspruch 1 genannten Schritten und eine Vorrichtung mit den in Anspruch 7 genannten Merkmalen vor. Weiterbildungen der Erfindung sind Gegenstand von Unteransprüchen.

Das erfindungsgemäße Verfahren zum Aufbringen einer Klebefolie auf die Oberfläche eines Bauteils umfasst stets die folgenden Schritte:
a. Es wird eine Klebefolie mit einer Klebeschicht bereitgestellt.
b. Es wird ein Bauteil mit einer zu beklebenden Oberfläche bereitgestellt.
c. Es wird eine physikalische Oberflächenaktivierung der Klebeschicht der Klebefolie durchgeführt.
d. Die Klebeschicht der Klebefolie wird befeuchtet.
e. Die oberflächenaktivierte und befeuchtete Klebefolie wird mit der zu beklebenden Oberfläche des Bauteils in Kontakt gebracht.

Es wurde gefunden, dass durch die physikalische Oberflächenaktivierung der Klebeschicht der Klebefolie in Verbindung mit einer nachfolgenden Befeuchtung der Klebeschicht vor dem Inkontaktbringen der oberflächenaktivierten und befeuchteten Klebefolie mit der zu beklebenden Oberfläche der Klebeprozess bzw. das Aufbringen der Klebefolie wesentlich verbessert und vereinfacht werden kann. Insbesondere ist mit diesem Verfahren eine besonders gleichmäßige Aufbringung der Klebefolie auf das Bauteil möglich, ohne dass es zu Lufteinschlüssen, Unregelmäßigkeiten oder anderen ungewollten Ungenauigkeiten bei dem Aufbringen der Klebefolie kommt. Vor allem ist mit dem erfindungsgemäßen Verfahren eine optimale Befeuchtung der Klebeschicht möglich, so dass weder zu wenig noch zu viel Feuchtigkeit auf die Klebeschicht aufgebracht wird.

Erfindungsgemäß bevorzugt wird nach der Oberflächenaktivierung zur Befeuchtung ein gleichmäßiger und dünner Wasserfilm auf die Klebeschicht aufgebracht. Hierdurch können Unregelmäßigkeiten in der Klebeschicht ausgeglichen werden, so dass ein sehr gleichmäßiges Klebeergebnis erzielt wird. Es ist grundsätzlich auch möglich, die Befeuchtung mit einer wässrigen Lösung oder Suspension zu bewirken. Grundsätzlich ist an Stelle von Wasser auch der Einsatz eines organischen Lösemittels oder Lösemittel-Wasser-Gemischs denkbar, in der Regel aber nicht bevorzugt.

Die Befeuchtung nach der Oberflächenaktivierung ist insbesondere bei solchen Fällen besonders vorteilhaft, in denen die kleberseitige Fläche der Klebefolie gezielt aufgeraut wird, um eine Haftung zu verbessern. Eine befriedigende gleichmäßige und optisch einwandfreie Anhaftung der kleberseitig aufgerauten Klebefolie ist in vielen Fällen nur unter Zuhilfenahme einer Befeuchtung der Klebeschicht möglich. Durch die erfindungsgemäß vorangehende physikalische Oberflächenaktivierung der Klebeschicht ist es möglich, die Befeuchtung bedarfsgerecht zu optimieren. Mit diesem Verfahren können in besonders vorteilhafter Weise Kapillarwirkungen in der Klebeschicht zum blasenfreien Auftrag einer Klebefolie auf verschiedenen Oberflächen ausgenutzt werden.

Ein weiterer besonderer Vorteil des erfindungsgemäßen Verfahrens ist, dass es ohne Weiteres einer Automatisierung zugänglich ist. Insofern kann das erfindungsgemäße Verfahren beispielsweise mit besonderem Vorteil bei der Fertigung von Kraftfahrzeugen eingesetzt werden. Herkömmlicherweise werden bei der Aufbringung von Klebefolien, beispielsweise von Aufklebern, auf den fertigen Lack einer Kraftfahrzeugkarosserie die Wasserbenetzung der Klebeseite der Klebefolie und die anschließende Aufbringung der Klebefolie manuell vorgenommen. Eine gleichmäßige Benetzung, bei der nicht zu viel und nicht zu wenig Wasser aufgetragen wird, ist hierbei sehr schwierig, so dass es unter Umständen zu unbefriedigenden Klebeergebnissen kommt. Zudem ist der personelle Aufwand hierfür sehr hoch. Mit dem erfindungsgemäßen Verfahren werden diese Probleme gelöst.

Die physikalische Oberflächenaktivierung der Klebeschicht führt insbesondere zu einer Erhöhung der Oberflächenenergie bei der Klebeschicht. Es wurde beobachtet, dass dies eine Erhöhung der Wasserbenetzbarkeit der Klebeschicht bewirkt. Die Oberflächenaktivierung führt insbesondere zu einem Aufbrechen der molekularen Strukturen in der Kleberschicht. Durch diese Anregung der Klebeschicht können vor allem hydrophile Eigenschaften der Oberfläche induziert werden, die die Benetzung mit Wasser oder mit einer wässrigen Lösung befördern. In der Regel hält dieser angeregte bzw. aktivierte Zustand der Oberfläche nicht lange an, so dass die Molekülstrukturen nach einer gewissen Zeitdauer, beispielsweise nach etwa 30 Minuten oder gegebenenfalls weniger, wieder in den Ausgangszustand zurückfallen. Zweckmäßigerweise erfolgt die Durchführung der vorstehenden Schritte d. und e. des erfindungsgemäßen Verfahrens daher innerhalb eines begrenzten Zeitraums nach der Oberflächenaktivierung. Bevorzugt sollten zwischen der physikalischen Oberflächenaktivierung der Klebeschicht und der anschließenden Befeuchtung nicht mehr als 30 Minuten bis zum Inkontaktbringen der Klebefolie mit der Oberfläche des Bauteils vergehen. In besonders bevorzugten Ausführungsformen nimmt der gesamte Prozess der Oberflächenaktivierung, Befeuchtung und des Inkontaktbringens nicht mehr als 20 Minuten, ganz besonders bevorzugt nicht mehr als 10 Minuten, insbesondere nicht mehr als 5 Minuten, in Anspruch.

Die Oberflächenenergie eines Substrats wird in der Regel als Energie pro Fläche mit der Einheit J/m² angegeben, wobei häufig auch die äquivalente Einheit N/m oder dyn/cm verwendet wird. Durch die physikalische Oberflächenaktivierung gemäß dem erfindungsgemäßen Verfahren wird vorzugsweise eine Oberflächenenergie erreicht, die ≥ 50 dyn/cm ist, besonders bevorzugt ≥ 60 dyn/cm, besonders bevorzugt ≥ 70 dyn/cm. Die Erfinder konnten zeigen, dass insbesondere bei einer Oberflächenenergie von ≥ 60 dyn/cm und ganz besonders bei einer Oberflächenenergie von ≥ 70 dyn/cm die Benetzbarkeit mit Wasser so gut ist, dass die Befeuchtung gemäß dem vorgenannten Verfahrensschritt d. besonders gut einstellbar und an die jeweiligen Bedingungen anpassbar ist.

Die Bestimmung der Oberflächenenergie erfolgt besonders bevorzugt erfolgt gemäß DIN ISO 8296 unter Verwendung von Testtinten, wobei in einem schnellen Verfahren die Oberflächenenergie der jeweiligen Festkörperoberfläche abgeschätzt werden kann. Hierbei werden kommerziell erhältliche Testtinten mit jeweils bekannter Oberflächenenergie bzw. Oberflächenspannung - bei Flüssigkeiten ist die Oberflächenenergie mit der Oberflächenspannung gleichzusetzen - auf die Festkörperoberfläche aufgetragen und beobachtet, in welcher Zeit sich die Testtinte auf der Oberfläche zusammenzieht. Bei Überprüfung mehrerer Testtinten in dieser Weise wird diejenige Testtinte identifiziert, die sich nicht mehr innerhalb der ersten Sekunden nach dem Auftragen zusammenzieht. Bei dieser Testtinte, deren Oberflächenenergie bekannt ist, stimmt die Oberflächenenergie der Festkörperoberfläche mit der der Testtinte überein.

Bei der Klebefolie handelt es sich beispielsweise um ein Dekor, einen Schriftzug oder um einen oder mehrere einzelne Buchstaben oder Dekorelemente, die auf die zu beklebende Oberfläche aufgebracht werden sollen. Insbesondere kann es sich um selbstklebende Dekorlackfolien oder Dekorfolien mit Kleberücken handeln. Weiterhin kann es sich bei der Klebefolie um an sich bekannte Steinschlagschutzfolien oder andere Schutzfolien handeln.

In einer bevorzugten Weiterbildung der Erfindung zeichnet sich die in dem Verfahren einsetzbare Klebefolie durch mindestens eines der unmittelbar folgenden Merkmale a. bis h. aus:
a. Die Klebefolie umfasst eine Trägerfolie, die auf einer Seite die Klebeschicht und auf einer anderen Seite eine Lackschicht aufweist.
b. Die Trägerfolie ist eine Kunststofffolie, eine Metallfolie oder eine Metall-Kunststoff-Kompositfolie.
c. Die Trägerfolie weist eine Dicke im Bereich von 10 µm bis 120 µm auf.
d. Die Klebeschicht weist eine Dicke im Bereich von 10 µm bis 80 µm, bevorzugt von 30 µm bis 60 µm, auf.
e. Die Klebeschicht weist eine gleichmäßige Dicke auf.
f. Die Klebeschicht besteht aus einer homogenen Klebemasse.
g. Die Klebeschicht weist eine Fläche im Bereich von 10 cm² bis 8 m² auf.
h. Die Lackschicht weist eine Dicke im Bereich von 20 µm bis 150 µm, bevorzugt von 30 µm bis 90 µm, besonders bevorzugt von 40 µm bis 60 µm, auf.

Besonders bevorzugt sind zumindest die unmittelbar vorstehenden Merkmale a. und b. und g. in Kombination miteinander realisiert. In einer bevorzugten Weiterbildung sind die Merkmale a. bis d. und g. und h., insbesondere a. bis e. und g. und h., in einer besonders bevorzugten Ausführungsform alle Merkmale a. bis h., in Kombination miteinander realisiert.

Das unmittelbar vorgenannte Merkmal e. ist besonders bevorzugt in Kombination mit dem Merkmal f. realisiert. Unter einer gleichmäßigen Dicke ist zu verstehen, dass die Klebeschicht nicht lokal durch Mikrostrukturkanäle zum Abführen von Luft oder sonstige Mikrostrukturen geschwächt ist. Bevorzugt ist sie durch Auftrag einer homogenen Klebermasse mittels eines Rakels gebildet und weist entsprechend eine im Wesentlichen ebene und gleichmäßige Oberfläche auf. Unter "homogen" wird verstanden, dass die Klebermasse keine Partikel, insbesondere sichtbare Partikel, enthält.

Der Einsatz mikrostrukturfreier Klebeschichten ermöglicht, dass in dem erfindungsgemäßen Verfahren Klebefolien mit sehr dünnen Trägern verwendet werden und dabei trotzdem hochglänzende "Class A-Oberfläche" erhalten werden können. Innerhalb des oben angegebenen Bereichs von 10 µm bis 120 µm sind Trägerfolien mit einer Dicke von 10 µm bis 60 µm, bevorzugt von 10 µm bis 50 µm, daher weiter bevorzugt, insbesondere wenn die Klebeschicht frei von den genannten Mikrostrukturen ist.

In besonders bevorzugter Weise kann die Klebeschicht von einem Acrylatkleber gebildet sein, bevorzugt mit einer Schichtdicke im Bereich von 20 bis 80 µm, insbesondere mit einer Schichtdicke von 50 µm, gebildet sein.

In Bezug auf die physikalische Oberflächenaktivierung weist das erfindungsgemäße Verfahren vorzugsweise mindestens eines der unmittelbar folgenden zusätzlichen Merkmale a. bis d. auf:
a. Die physikalische Oberflächenaktivierung der Klebeschicht erfolgt durch eine Plasmabehandlung.
b. Die physikalische Oberflächenaktivierung der Klebeschicht erfolgt durch eine Coronabehandlung.
c. Die physikalische Oberflächenaktivierung der Klebeschicht erfolgt durch eine Flammbehandlung.
d. Die physikalische Oberflächenaktivierung der Klebeschicht erfolgt in einem Vakuum.

In besonderer Weise eignet sich eine Plasmabehandlung für das erfindungsgemäße Verfahren, da mit einer Plasmabehandlung sehr effektiv und in praktisch sehr gut umzusetzender Weise die Oberflächenaktivierung der Klebeschicht der Klebefolie erreicht werden kann. Bei einem Plasma handelt es sich um eine Wolke umfassend ein mindestens teilweise ionisiertes Gas, durch dessen Einfluss die Erhöhung der Oberflächenenergie für die Oberflächenaktivierung der Klebeschicht erreicht wird. Geeignete Plasmageneratoren sind im Handel erhältlich.

Prinzipiell kann die Plasmabehandlung bei atmosphärischem Druck oder bei Überdruck (Hochdruckplasma) oder Unterdruck (Niederdruckplasma) vorgenommen werden. Für die Zwecke des erfindungsgemäßen Verfahrens eignet sich insbesondere ein Niederdruck-Plasma, vor allem eine Plasmabehandlung im Vakuum. Unter einem Vakuum ist dabei bevorzugt ein Druck < 0,05 mbar, beispielsweise ein Druck von circa 0,02 mbar, zu verstehen. Demgemäß sind die unmittelbar vorgenannten Merkmale a. und d. in Kombination besonders bevorzugt. Die Oberflächenaktivierung kann in diesem Fall insbesondere innerhalb einer zu evakuierenden Behandlungskammer (Plasmakammer) erfolgen, in die die Klebefolie mit der zu aktivierenden Klebeschicht überführt wird. Die Behandlungszeiten für die Plasmabehandlung können beispielsweise in einem Bereich von 10s bis 120 s liegen.

In anderen Fällen kann es bevorzugt sein, ein sogenanntes kaltes Plasma einzusetzen, bei dem prinzipiell atmosphärische Druckverhältnisse anliegen und es insbesondere auch nicht zu einer Erhöhung der Temperatur bei der Bildung des Plasmas kommt.

Als Alternative zu einer Plasmabehandlung eignet sich auch eine Coronabehandlung für die physikalische Oberflächenaktivierung. Eine Coronabehandlung basiert auf einem Gasentladungsverfahren, das zu einer Erhöhung der Oberflächenenergie der behandelten Fläche und damit zu einer verbesserten Benetzbarkeit mit Wasser führt. Hierbei kommt es zu einer elektrischen Entladung zwischen zwei Elektroden im Allgemeinen unter Atmosphärendruck, wobei durch das resultierende elektrische Feld die Gasmoleküle im Gas, insbesondere in der Luft, angeregt und gegebenenfalls gespalten werden. Die so entstehenden geladenen reaktiven Teilchen reagieren mit der Klebeschicht und führen so zu der Oberflächenaktivierung. Gegenüber einer solchen Coronabehandlung hat die Plasmabehandlung im Allgemeinen den Vorteil, dass mit dem Plasma eine stärkere Erhöhung der Oberflächenenergie erreicht werden kann und dass im Allgemeinen bei einem Plasma die Aktivierung der Oberfläche länger andauert als bei einer Coronabehandlung.

Weiterhin eignet sich eine Flammbehandlung für die physikalische Oberflächenaktivierung der Klebeschicht. Bei einer Flammbehandlung wird die Klebeschicht der Klebefolie einer Flamme aus einem Luft/Gas-Gemisch ausgesetzt, wobei eine stabile und oxidierend wirkende Flamme produziert wird. Auch hierdurch kann der oberflächenaktivierende Effekt bei der Klebeschicht erzielt werden, so dass die Benetzbarkeit mit Wasser verbessert wird. Eine Coronabehandlung und insbesondere eine Plasmabehandlung haben gegenüber einer Flammbehandlung im Allgemeinen den Vorteil, dass hiermit in der Regel ein gleichmäßigeres Ergebnis über die Fläche erzielt werden kann.

Eine Einrichtung zur physikalischen Oberflächenaktivierung, insbesondere eine Plasmabehandlungseinrichtung, kann mit besonderem Vorteil Bestandteil einer automatisierten Vorrichtung zum Aufbringen der Klebefolie sein.

In einer ganz besonders bevorzugten Ausgestaltung des erfindungsgemäßen Verfahrens zeichnet sich das Verfahren durch das unmittelbar folgende zusätzliche Merkmal a. aus:
a. Das Befeuchten der Klebeschicht erfolgt durch Vernebelung von Wasser.

Durch die Vernebelung des Wassers ist es mit besonderem Vorteil möglich, eine definierte Menge Wasser in Form von feinen Wassertröpfchen im Bereich der Klebeschicht zu erzeugen, wobei die Wassertröpfchen auf der Klebeschicht abgeschieden werden und so den für die weitere Aufbringung der Klebefolie vorgesehenen Wasserfilm auf der Klebeschicht ausbilden.

Bei der Vernebelung von Wasser wird das Wasser mit feinster Verteilung in der gasförmigen Umgebung, insbesondere in der Luft, verteilt. Bevorzugt wird durch das Vernebeln eine Verteilung von sehr kleinen Wassertropfen in der Luft erreicht, die eine Befeuchtung der Klebeschicht bewirken. Die Wassertropfen in der Luft während der Vernebelung haben vorzugsweise einen mittleren Durchmesser in einem Bereich zwischen etwa 1 und 10 µm, besonders bevorzugt zwischen 2 und 5 µm, ganz besonders bevorzugt zwischen 2 und 4 µm.

Der durch Abscheiden der Wassertröpfchen auf der Klebeschicht resultierende Wasserfilm ist bevorzugt sehr dünn. Vorzugsweise sind die Tröpfchen auf der Klebeschicht durch die Befeuchtung so verteilt, dass sie einen durchgängigen Film bilden, der insbesondere eine Dicke in einem Bereich von 1 nm bis 1000 µm aufweist. Besonders bevorzugt liegt die Dicke des Wasserfilms in einem Bereich von 10 nm bis 500 µm, ganz besonders bevorzugt in einem Bereich von 10 nm bis 1000 nm, vorzugsweise 10 nm bis 100 nm. Insbesondere sollte dabei der Wasserfilm so dick sein, dass durch den Wasserfilm die Ungleichmäßigkeiten in der Klebeschicht ausgeglichen werden.

Die Vernebelung kann mit besonderem Vorteil mithilfe eines Ultraschallverneblers bewirkt werden, wobei durch den wirkenden Ultraschall das Wasser in Schwingung versetzt wird. Dadurch lösen sich Tröpfchen ab. Durch Einstellung der Frequenz des Ultraschalls kann die Größe der Tröpfchen beeinflusst werden. Je höher die Ultraschallfrequenz ist, umso feiner sind die resultierenden Tröpfchen. Insofern eignet sich ein Ultraschallvernebler in besonders vorteilhafter Weise für die Befeuchtung der Klebeschicht. Die Befeuchtung bzw. die Vernebelung kann dabei so eingestellt werden, dass der resultierende Wasserfilm auf der Klebeschicht ausreichend ist, um die Ungleichmäßigkeiten in der Klebeschicht auszugleichen. Die Bildung größerer Tropfen sollte zweckmäßigerweise vermieden werden, was sich insbesondere auch durch die Zeitdauer des Befeuchtens einstellen lässt.

Weiterhin eignet sich eine übliche Sprühpistole zur Befeuchtung der oberflächenaktivierten Klebeschicht. Die Sprühpistole kann beispielsweise mit einem Hubzylinder betätigt werden. Durch die Einstellung der Zylinderhubgeschwindigkeit und/oder des Ausfahrweges bzw. des Zylinderhubes kann die Intensität der Befeuchtung variiert werden, um eine gleichmäßig benetzte Klebeschicht zu erreichen.

Weiterhin ist es möglich, für die Befeuchtung einen Tisch mit einem beweglichen XY-Kopf einzusetzen, der die Befeuchtungseinheit wie beispielsweise eine Sprühpistole trägt. Der XY-Kopf kann dabei vergleichbar mit einem 3D-Drucker genutzt werden, um die zu befeuchtende Oberfläche abzufahren.

Eine Einrichtung zur Befeuchtung der Klebeschicht der Klebefolie, beispielsweise ein Ultraschallvernebler oder eine Sprühpistole, kann mit besonderem Vorteil Bestandteil einer automatisierten Vorrichtung zum Aufbringen der Klebefolie sein.

In einer bevorzugten Ausgestaltung des erfindungsgemäßen Verfahrens zeichnet sich das Verfahren durch das unmittelbar folgende zusätzliche Merkmal a. aus:
a. Das Inkontaktbringen der Klebefolie mit der zu beklebenden Oberfläche erfolgt initial durch punktuelles Anpressen der Klebefolie auf der zu beklebenden Oberfläche.

Durch das initiale punktuelle Anpressen der Klebefolie auf der zu beklebenden Oberfläche wird erreicht, dass sich der Kontaktbereich anschließend radial nach außen fortsetzen kann, bis die Klebeschicht die Oberfläche vollflächig kontaktiert, so dass es sehr zuverlässig zu einer gleichmäßigen und blasenfreien Verklebung kommt. Dieses anfängliche punktuelle Anpressen der Klebefolie kann insbesondere mittels mindestens eines Stempelmittels erfolgen, das die Klebefolie punktuell an die zu beklebende Oberfläche drückt. Das Stempelmittel kann mit besonderem Vorteil Bestandteil in einer automatisierten Vorrichtung zum Aufbringen der Klebefolie sein. Ein solches Stempelmittel kann beispielsweise einen Zylinder, einen ausfahrbaren Kolben und einen Stempelkopf, insbesondere einen abgerundeten Stempelkopf, umfassen.

Bei dem Bereitstellen der Klebefolie mit der Klebeschicht kann es insbesondere vorgesehen sein, dass eine die Klebeschicht schützende Schutzfolie vorab entfernt wird und die Klebefolie dann in einer Einrichtung für die weitere Durchführung des Verfahrens eingehängt oder eingespannt wird. Beispielsweise kann zu diesem Zweck eine Trägerfolie vorgesehen sein, an der die Klebefolie angebracht wird. So kann die Trägerfolie Teil einer Vorrichtung sein, mit der die oberflächenaktivierte und befeuchtete Klebefolie an das zu beklebende Bauteil bzw. an dessen Oberfläche angebracht wird. Die Klebefolie kann hierbei insbesondere mit der der Klebeschicht abgewandten Seite an der Trägerfolie anhaften, sodass die Seite der Klebefolie mit der Klebeschicht frei ist und mit der Oberfläche des Bauteils kontaktiert werden kann.

In einer besonders bevorzugten Ausgestaltung des Verfahrens ist das Verfahren durch das unmittelbar folgende zusätzliche Merkmal a. gekennzeichnet.
a. Das Inkontaktbringen der Klebefolie mit der zu beklebenden Oberfläche erfolgt unter Verwendung einer elastischen Membran, die zum Anpressen der Klebefolie auf der zu beklebenden Oberfläche auslenkbar ist.

Die Verwendung einer elastischen Membran zum Anpressen der Klebefolie auf der zu beklebenden Oberfläche eignet sich in ganz besonders bevorzugter Weise für das erfindungsgemäßen Verfahren, da hiermit zum einen ein besonders gleichmäßiger Klebeprozess erreicht werden kann und zum anderen in besonders vorteilhafter Weise eine Automatisierung des Prozesses möglich ist. Um die Auslenkbarkeit zu ermöglichen, ist bevorzugt eine randseitige Aufhängung der elastischen Membran, beispielsweise in einem geeigneten Rahmen, vorgesehen.

Im Hinblick auf die Auslenkung der elastischen Membran zeichnet sich das erfindungsgemäße Verfahren in besonders bevorzugter Weise durch das unmittelbar folgende zusätzliche Merkmal a. aus:
a. Die Auslenkung der elastischen Membran erfolgt durch Erzeugen eines Unterdrucks, insbesondere eines Vakuums, in einem Raum zwischen der elastischen Membran und der Oberfläche des Bauteils.

Die Klebefolie, die beispielsweise an der erwähnten Trägerfolie haftet oder anderweitig aufgehängt ist, befindet sich in dieser Ausführungsform des Verfahrens zwischen der elastischen Membran und der Oberfläche des Bauteils. Durch die Erzeugung eines Unterdrucks in dem Raum zwischen derelastischen Membran und der Oberfläche des Bauteils wird die elastische Membran in Richtung des Bauteils gezogen, so dass dadurch die Klebefolie mit der Oberfläche des Bauteils in Kontakt kommt.

Unter Unterdruck ist hierbei zu verstehen, dass der Druck niedriger als Atmosphärendruck (Atmosphärendruck ≈ 1 bar) ist. Der Unterdruck liegt vorzugsweise in einem Bereich zwischen 0,01 mbar und 1 bar, besonders bevorzugt zwischen 0,01 mbar und 750 mbar. Besonders bevorzugt liegt der Druck unterhalb von 0,05 mbar. Beispielsweise kann er circa 0,02 mbar betragen.

Durch die Auslenkung der Membran kommt es zunächst zu einem punktförmigen Kontaktbereich an der Oberfläche des Bauteils, der sich aus der Wölbung der Membran ergibt. Im weiteren Verlauf werden auch die anderen Bereiche der Membran zunehmend gegen die Oberfläche gezogen, so dass sich der Kontaktbereich radial nach außen ausbreitet, bis die Klebeschicht die Oberfläche vollflächig kontaktiert.

Bei einer herkömmlichen manuellen Applikation einer Klebefolie ist ein solches Vorgehen kaum möglich. Um eine korrekte Positionierung der Klebefolie auf der Oberfläche bei einer manuellen Applikation zu gewährleisten, muss in der Regel manuell zunächst ein Rand einer Klebefolie ausgerichtet und anschließend angedrückt werden.

Eine weitere Auslenkung der Membran kann insbesondere durch eine Erhöhung des Drucks auf der dem Bauteil abgewandten Seite der elastischen Membran erreicht werden. Insgesamt kann dabei die Auslenkung der Membran durch die Erzeugung einer Druckdifferenz erreicht werden. Insbesondere ist dabei der Druck in dem Raum zwischen der elastischen Membran und der Oberfläche des Bauteils niedriger als auf der anderen Seite der Membran.

Die Druckdifferenz kann beispielsweise dadurch erreicht werden, dass sich zwischen der elastischen Membran und der Oberfläche des Bauteils ein Vakuum befindet und dass auf der anderen Seite der Membran Atmosphärendruck herrscht oder erzeugt wird. In anderen Ausgestaltungen kann zwischen der elastischen Membran und der Oberfläche des Bauteils atmosphärischer Druck herrschen. Zur Erzeugung der Druckdifferenz wird in diesen Fällen auf der anderen Seite der Membran ein Überdruck erzeugt (Überdruck - Druck höher als Atmosphärendruck), so dass die elastische Membran in Richtung des Bauteils ausgelenkt wird. Auch dies bewirkt, dass die zwischen der elastischen Membran und der Oberfläche des Bauteils angeordnete Klebefolie mit der oberflächenaktivierten und befeuchteten Klebeschicht voran gegen die Oberfläche des Bauteils gedrückt wird.

Zur Einstellung der Druckdifferenz kann beispielsweise eine Unterdruckkammer, die sich in dem Raum zwischen der elastischen Membran und der Oberfläche des Bauteils befindet, und eine Druckausgleichskammer, die sich auf der hiervon abgewandten Seite der Membran befindet, zunächst evakuiert werden. Anschließend wird die Druckausgleichskammer belüftet, so dass sich auf dieser Seite wieder atmosphärischer Druck einstellt, der die elastische Membran in Richtung des Bauteils auslenkt.

Ein besonderer Vorteil des erfindungsgemäßen Verfahrens ist, dass das Verfahren einer Automatisierung zugänglich ist. In besonders bevorzugter Weise wird das Verfahren daher mit Hilfe eines automatisierten Systems durchgeführt. Insbesondere in dieser Ausführungsform kann es beispielsweise in der Kraftfahrzeugproduktion mit besonderem Vorteil zum Einsatz kommen kann. In diesem Fall handelt es sich bei dem zu beklebenden Bauteil bevorzugt um eine Kraftfahrzeugkarosserie oder um ein Teil einer Kraftfahrzeugkarosserie oder um ein Anbauteil eines Kraftfahrzeugs. In dieser Ausführungsform umfasst das Verfahren bevorzugt zwei oder mehr, insbesondere alle der unmittelbar folgenden Schritte a. bis d.:
a. Beschichtung einer Kraftfahrzeugkarosserie oder von Teilen einer Kraftfahrzeugkarosserie mit mindestens einem Lack.
b. Trocknen und/oder Aushärten des mindestens einen Lacks.
c. Gegebenenfalls Montage von Anbauteilen an tragende Komponenten der mit dem getrockneten und/oder ausgehärteten mindestens einen Lack beschichteten Kraftfahrzeugkarosserie.
d. Aufbringen der Klebefolie, die eine Klebeschicht umfasst, auf eine Oberfläche der mit dem getrockneten und/oder ausgehärteten mindestens einen Lack beschichteten Kraftfahrzeugkarosserie oder Teilen der Kraftfahrzeugkarosserie oder eines der daran montierten Anbauteile.

Das Aufbringen der Klebefolie gemäß dem vorgenannten Merkmal d. erfolgt bevorzugt in der oben beschriebenen Weise.

Bei dem mindestens einen Lack handelt es sich bevorzugt um einen üblichen mehrlagigen Automobillack. Karosserien und Karosserieteile werden in aller Regel grundiert, mit einem Basislack lackiert und abschließend mit einem Klarlacküberzug versehen. Die hierfür erforderlichen Arbeits- und Zwischenschritte sind bekannt. Für die vorliegende Erfindung ist lediglich wichtig, dass der mindestens eine Lack auf dem zu beklebenden Substrat vorzugsweise getrocknet und ausgehärtet ist, also eine im Wesentlichen druckfeste Oberfläche bietet und kein Lösungsmittel mehr enthält. Ein Klarlackauftrag ist nach dem Aufbringen der Klebefolie gemäß der Erfindung in der Regel nicht erforderlich bzw. nicht vorgesehen.

Der Begriff "Anbauteil" ist im Kontext der Erfindung weit auszulegen. Hiervon sind zum einen nicht lackierte Teile wie Scheiben oder Scheinwerfer umfasst, zum anderen aber auch lackierte Teile wie eine Motorhaube, eine Tür, ein Kotflügel und ein Dachelement oder gefärbte Kunststoffteile. Gegebenenfalls wurde auf diese Anbauteile separat von der Kraftfahrzeugkarosserie ein Lack aufgebracht und getrocknet und/oder ausgehärtet.

Die Erfindung umfasst weiterhin eine Vorrichtung zum Aufbringen einer Klebefolie auf einer Oberfläche eines Bauteils. Diese Vorrichtung ist insbesondere zur Durchführung des oben beschriebenen, erfindungsgemäßen Verfahrens eingerichtet. Die erfindungsgemäße Vorrichtung zeichnet sich dabei durch die unmittelbar folgenden Merkmale a. bis d. aus:
a. Die Vorrichtung umfasst eine Einrichtung zur Aufnahme einer Klebefolie mit einer Klebeschicht.
b. Die Vorrichtung umfasst eine Einrichtung zur physikalischen Oberflächenaktivierung der Klebeschicht der Klebefolie.
c. Die Vorrichtung umfasst eine Einrichtung zur Befeuchtung der Klebeschicht der Klebefolie.
d. Die Vorrichtung umfasst eine Einrichtung zum Inkontaktbringen der oberflächenaktivierten und befeuchteten Klebefolie mit der zu beklebenden Oberfläche des Bauteils.

Bezüglich weiterer Details der Vorrichtung wird auch auf die obige Beschreibung im Zusammenhang mit dem erläuterten erfindungsgemäßen Verfahren verwiesen.

Bei der Einrichtung zur Aufnahme der Klebefolie mit der Klebeschicht kann es sich insbesondere um eine Trägerfolie handeln, die zum Positionieren der Klebefolie im Bereich der zu beklebenden Oberfläche des Bauteils vorgesehen ist. Vorzugsweise haftet die Klebefolie mit ihrer der Klebeschicht abgewandten Seite an der Trägerfolie. Die Trägerfolie kann vorzugsweise in oder an einem Rahmen fixiert sein. Hierzu kann sie Positionierungs- und Fixiermittel aufweisen, die das Fixieren am Rahmen erleichtern.

Die Klebefolie ist an der Trägerfolie zweckmäßigerweise so angeordnet, dass sich die Trägerfolie mit der Klebefolie zwischen einer Einrichtung zum Anpressen der Klebefolie auf das Bauteil, insbesondere einer elastischen Membran, und der zu beklebenden Oberfläche des Bauteils befindet. Da die Klebefolie in der Regel einschließlich ihrer Ränder an die zu beklebende Oberfläche gepresst werden soll, erleichtert die Trägerfolie ihre Positionierung. Nach dem Anpressen der Klebefolie wird die Trägerfolie vorzugsweise von der Klebefolie abgezogen.

Alternativ zu der Trägerfolie können auch andere Einrichtungen zur Aufnahme der Klebefolie vorgesehen sein, beispielsweise Haken oder ähnliche mechanische Befestigungsmittel, in die die Klebefolie eingehängt wird.

In Bezug auf die Einrichtung zur physikalischen Oberflächenaktivierung der Klebeschicht ist die erfindungsgemäße Vorrichtung vorzugsweise durch mindestens eines der unmittelbar folgenden zusätzlichen Merkmale a. bis d. gekennzeichnet:
a. Die Einrichtung zur Oberflächenaktivierung der Klebeschicht umfasst eine Einrichtung zur Erzeugung eines Plasmas.
b. Die Einrichtung zur Oberflächenaktivierung der Klebeschicht umfasst eine Einrichtung zur Coronabehandlung.
c. Die Einrichtung zur Oberflächenaktivierung der Klebeschicht umfasst eine Einrichtung zur Flammbehandlung.
d. Die Einrichtung zur Oberflächenaktivierung der Klebeschicht umfasst eine Einrichtung zur Erzeugung eines Vakuums.

Bei der Einrichtung zur Erzeugung eines Plasmas oder der Einrichtung zur Coronabehandlung oder der Einrichtung zur Flammbehandlung kann es sich um dem Fachmann an sich bekannte Einrichtungen handeln, die allgemein für eine Aktivierung von Oberflächen eingesetzt werden können. In Bezug auf die Einrichtung zur Erzeugung eines Plasmas sind insbesondere Niederdruckplasmaeinrichtungen bevorzugt. Zur Erzeugung des Niederdrucks und insbesondere zur Erzeugung eines Vakuums ist mit besonderem Vorteil eine Evakuierungseinrichtung vorgesehen, in die die Klebeschicht der Klebefolie eingebracht wird, so dass die Plasmabehandlung in einem Vakuum erfolgen kann.

In Bezug auf die Einrichtung zur Befeuchtung der Klebeschicht der Klebefolie zeichnet sich die erfindungsgemäße Vorrichtung vorzugsweise durch das folgende zusätzliche Merkmal aus:
a. Die Einrichtung zur Befeuchtung der Klebeschicht umfasst eine Verneblungseinrichtung, insbesondere einen Wasservernebler.

Bei der Vernebelungseinrichtung handelt es sich beispielsweise um einen Ultraschallvernebler, mit dem in besonders geeigneter Weise die Tröpfchengröße in dem erzeugten Nebel eingestellt und reguliert werden kann. Weiterhin kann eine Sprühpistole zu diesem Zweck eingesetzt werden.

In Bezug auf die Einrichtung zum Inkontaktbringen der Klebefolie mit der zu beklebenden Oberfläche weist die erfindungsgemäße Vorrichtung vorzugsweise mindestens eines der unmittelbar folgenden zusätzlichen Merkmale a. und b. auf:
a. Die Einrichtung zum Inkontaktbringen der Klebefolie mit der zu beklebenden Oberfläche umfasst eine auslenkbare elastische Membran zum Anpressen der Klebefolie auf der zu beklebenden Oberfläche des Bauteils.
b. Die Einrichtung zum Inkontaktbringen der Klebefolie mit der zu beklebenden Oberfläche umfasst mindestens ein Stempelmittel zum punktuellen Inkontaktbringen der Klebefolie mit der zu beklebenden Oberfläche.

Das Stempelmittel kann in bevorzugter Weise mit einem insbesondere abgerundeten Stempelkopf, einem ausfahrbaren Kolben und einen betätigbaren Zylinder gebildet sein. Bezüglich weiterer Details zu dem mindestens einen Stempelmittel wird auch auf die obige Beschreibung verwiesen.

In Bezug auf die elastische Membran kann die Vorrichtung sich insbesondere durch mindestens eines der unmittelbar folgenden Merkmale a. bis c. auszeichnen:
a. Die elastische Membran besteht aus einem elastischen Polymermaterial, insbesondere aus Naturkautschuk oder Silikon.
b. Die elastische Membran weist eine gleichmäßige Dicke auf.
c. Die elastische Membran weist Schwächungs- und oder Verstärkungsbereiche zur gezielten Beeinflussung der Geometrie des gewölbten Zustands auf.

Besonders bevorzugt sind entweder die unmittelbar vorstehenden Merkmale a. und b., oder a. und c. in Kombination miteinander realisiert.

Eine Beeinflussung der Geometrie des gewölbten Zustands der Membran kann bei Bildung des oben erwähnten punktförmigen Kontaktbereichs hilfreich sein. Wenn etwa eine Vertiefung in der zu beklebenden Oberfläche vorliegt, sollte der punktförmige Kontaktbereich idealerweise am tiefsten Punkt der Vertiefung entstehen. Es kann bevorzugt sein, die Bildung eines kreisförmigen Kontaktbereichs zu vermeiden, da ansonsten Lufteinschlüsse auftreten können.

Ist die elastische Membran beispielsweise in einem Bereich dünner ausgebildet als in einem anderen Bereich, so wird sie sich in diesem Bereich beim Anlegen eines Drucks oder Unterdrucks leichter und weiter wölben als in den übrigen Bereichen. Das Umgekehrte gilt im Falle einer Verstärkung der elastischen Membran.

Die Einführung von Schwächungs- und oder Verstärkungsbereichen in die elastische Membran kann weiterhin zweckmäßigsein, um die Ausdehnung des Kontaktbereichs zu beeinflussen. Insbesondere beim Aufkleben der Klebefolie auf gebogene Oberflächen, insbesondere auf Oberflächen mit Vertiefungen, kann dies vorteilhaft sein.

Die Vorrichtung kann vorzugsweise so ausgestaltet sein, dass die elastische Membran mittels einer Druckdifferenz auslenkbar ist und auf diese Weise die Klebefolie an die zu beklebende Oberfläche des Bauteils anpresst.

Vorzugsweise zeichnet die die erfindungsgemäße Vorrichtung durch das unmittelbar folgende zusätzliche Merkmal a. aus:
a. Die Einrichtung zum Inkontaktbringen der Klebefolie mit der zu beklebenden Oberfläche umfasst eine Einrichtung zur Erzeugung eines Unterdrucks in einem Raum zwischen der elastischen Membran und der Oberfläche des Bauteils zur Auslenkung der elastischen Membran.

In einer Weiterbildung dieses Aspektes der erfindungsgemäßen Vorrichtung umfasst die Einrichtung zum Inkontaktbringen der Klebefolie mit der zu beklebenden Oberfläche weiterhin eine Einrichtung zur Erhöhung des Drucks auf der anderen Seite der elastischen Membran im Vergleich mit dem erzeugten Unterdruck in dem Raum zwischen der elastischen Membran und der Oberfläche des Bauteils. Bei dieser Einrichtung zur Erhöhung des Drucks auf der anderen Seite der elastischen Membran kann es sich beispielsweise um ein Entlüftungsventil in einer Druckausgleichskammer handeln. In dieser Ausführungsform kann insbesondere eine Unterdruckkammer in dem Raum zwischen der elastischen Membran und der Oberfläche des Bauteils und eine Druckausgleichskammer auf der anderen Seite der Membran vorgesehen sein. Für die Auslenkung der elastischen Membran kann es dabei vorgesehen sein, dass zunächst sowohl die Unterdruckkammer als auch die Druckausgleichskammer mit einem Unterdruck beaufschlagt werden, wobei insbesondere eine Evakuierung beider Räume zur Erzeugung eines Vakuums vorgesehen sein kann. In diesem Zustand ist die elastische Membran noch nicht ausgelenkt, da sich auf beiden Seiten der Membran der gleiche Druck (Vakuum) einstellt. Nach Erreichen des Vakuums kann durch Betätigung des Entlüftungsventils der Druck in der Druckausgleichskammer gegenüber dem umgebenden atmosphärischen Druck ausgeglichen werden, so dass in der Druckausgleichskammer sich der Druck im Vergleich mit der Unterdruckkammer erhöht. Durch diese Maßnahme lenkt sich die elastische Membran in Richtung des Bauteils aus, wodurch die dazwischen angeordnete Klebefolie mit der oberflächenaktivierten und befeuchteten Klebeschicht voran gegen die zu beklebende Oberfläche des Bauteils gepresst wird.

Bei dem zu beklebenden Bauteil kann es sich insbesondere um ein im Prinzip fertig lackiertes Karosserieteil eines Kraftfahrzeugs oder ein anderes lackiertes Bauteil oder Werkstück handeln. Insbesondere kann das Bauteil auch bereits mit einer Klarlackschicht versehen sein. Prinzipiell eignen sich verschiedenartige Bauteile als Untergrund für die aufzubringende Klebefolie. Durch die erfindungsgemäße Optimierung des Aufbringprozesses der Klebefolie auf die Oberfläche können auch herkömmlicherweise eher problematische Bauteile entsprechend beklebt werden.

In einer besonders bevorzugten Ausgestaltung weist die erfindungsgemäße Vorrichtung das unmittelbar folgende zusätzliche Merkmal a. auf:
a. Sie umfasst einen Rahmen, der dazu ausgebildet ist, gemeinsam mit der zu beklebenden Oberfläche und der elastischen Membran eine Unterdruckkammer zu bilden, in der die Klebefolie angeordnet ist und in welche die elastische Membran sich beim Beaufschlagen der Unterdruckkammer mit einem Unterdruck wölben kann.

Wie bereits beschrieben, ist es besonders vorteilhaft, beim Aufbringen der Klebefolie im Bereich zwischen der zu beklebenden Oberfläche und der elastischen Membran einen Unterdruck anzulegen. Hierzu ist der Rahmen vorgesehen.

Die elastische Membran kann zu Temperierzwecken doppelwandig ausgebildet sein und Anschlüsse für ein Temperiermittel wie beispielsweise Wasser aufweisen.

Bei den Mitteln zur Fixierung der Klebefolie oder der Trägerfolie kann es sich beispielsweise um Stifte oder Haken handeln, die zu Löchern in der Klebe- oder der Trägerfolie korrespondieren.

In einer bevorzugten Weiterbildung der Erfindung zeichnet sich die Vorrichtung durch mindestens eines der unmittelbar folgenden Merkmale a. bis f. aus:
a. Der Rahmen ist rechteckig ausgebildet.
b. Der Rahmen weist eine erste Öffnung auf, die von der Membran verschlossen ist.
c. Der Rahmen umfasst mindestens ein elastisches Dichtelement, das dichtend auf der Oberfläche aufliegen kann.
d. Der Rahmen umfasst eine zweite Öffnung, an deren Rändern das mindestens eine elastische Dichtelement fixiert ist.
e. Der Rahmen umfasst mindestens einen Anschluss für eine Unterdruckquelle, über den die Unterdruckkammer mit Unterdruck beaufschlagt werden kann.
f. Der Rahmen umfasst als Mittel zur Fixierung der Klebefolie mindestens eine Halterung.

Bevorzugt sind zumindest die unmittelbar vorstehenden Merkmale a. bis e. in Kombination miteinander realisiert, besonders bevorzugt alle Merkmale a. bis f..

Das mindestens eine Dichtelement dient zum Abdichten der Unterdruckkammer. Sie bestehen bevorzugt aus elastischen Polymermaterialien, beispielsweise aus dem bereits erwähnten Naturkautschuk. Der mindestens eine Anschluss für die Unterdruckquelle dient zur Erzeugung des Unterdrucks in der Unterdruckkammer.

In einer weiteren bevorzugten Weiterbildung der Erfindung zeichnet sich die Vorrichtung durch mindestens eines der unmittelbar folgenden Merkmale a. bis d. aus:
a. Der Rahmen ist aus zwei oder mehr Teilrahmen zusammengesetzt.
b. Der Rahmen ist rechteckig ausgebildet und aus den zwei oder mehr rechteckigen Teilrahmen zusammengesetzt.
c. Der Rahmen umfasst einen ersten rechteckigen Teilrahmen, an dem das mindestens eine elastische Dichtelement fixiert ist und der den mindestens einen Anschluss für die Unterdruckquelle umfasst.
d. Der Rahmen umfasst einen zweiten rechteckigen Teilrahmen, der die mindestens eine Halterung für die Klebefolie umfasst.

Bevorzugt sind zumindest die unmittelbar vorstehenden Merkmale a. bis c. in Kombination miteinander realisiert, besonders bevorzugt alle Merkmale a. bis d..

Beim Einsatz von zwei oder mehr Teilrahmen kann es erforderlich sein, an Verbindungsflächen der Teilrahmen weitere Dichtungselemente vorzusehen, um die Dichtigkeit der Unterdruckkammer zu gewährleisten.

Zum Zwecke der oben beschriebenen Steuerung oder Regelung des Unterdrucks kann die Vorrichtung eine geeignete Steuerungs- oder Regeleinrichtung aufweisen.

In einer weiteren bevorzugten Weiterbildung der Erfindung zeichnet sich die Vorrichtung durch mindestens eines der unmittelbar folgenden Merkmale a. bis c., bevorzugt durch eine Kombination der unmittelbar folgenden Merkmale a. und b. oder a. und c., aus:
a. Sie umfasst eine Druckausgleichskammer, die unter anderem von der Membran begrenzt wird.
b. Sie umfasst mindestens einen Anschluss für eine Druck- oder eine Unterdruckquelle, der in die Druckausgleichskammer führt.
c. Sie umfasst mindestens ein Ventil, über das die Druckausgleichskammer belüftet werden kann.

Diese Druckausgleichskammer wird gegebenenfalls benötigt, um die beschriebene Wölbung der elastischen Membran zu erzeugen oder zu verstärken. Wenn ein Unterdruck in der Unterdruckkammer angelegt ist, kann es hierzu völlig ausreichend sein, die Druckausgleichskammer über das Ventil zu belüften, um die geforderte Wölbung der Membran zu bewirken oder zu verstärken.

Besonders bevorzugt ist die Vorrichtung an ein automatisiertes System integriert, beispielsweise in einen Roboter. Bevorzugt handelt es sich bei dem automatisierten System um eine Fertigungsstraße zur Produktion von Kraftfahrzeugen.

Grundsätzlich eignen sich das beschriebene Verfahren und die beschriebene Vorrichtung natürlich nicht nur zum Einsatz in der Produktion von Kraftfahrzeugen. Beispielsweise auch andere Serienprodukte können erfindungsgemäß mit Klebefolien versehen werden, beispielsweise Fahrräder.

Weitere Merkmale und Vorteile der beschriebenen Erfindung ergeben sich aus der nachfolgenden Beschreibung von Ausführungsbeispielen in Verbindung mit den Zeichnungen, in denen bevorzugte Ausführungsformen der erfindungsgemäßen Vorrichtung bzw. Teilen der Vorrichtung zum Auftragen einer Klebefolie auf ein Bauteil dargestellt sind. Die dargestellten und beschriebenen Ausführungsformen dienen lediglich zur Erläuterung und zum besseren Verständnis der Erfindung und sind in keiner Weise einschränkend zu verstehen.

### KURZBESCHREIBUNG DER ZEICHNUNGEN

In den Figuren zeigen:
- Fig. 1: schematische Schnittdarstellung einer bevorzugten Ausführungsform eines Teils der erfindungsgemäßen Vorrichtung zum Aufbringen einer Klebefolie auf die Oberfläche eines Bauteils;
- Fig. 2: schematische Schnittdarstellung einer weiteren bevorzugten Ausführungsform eines Teils einer erfindungsgemäßen Vorrichtung zum Aufbringen einer Klebefolie auf die Oberfläche eines Bauteils;
- Fig. 3: schematische Schnittdarstellung einer weiteren bevorzugten Ausführungsform eines Teils einer erfindungsgemäßen Vorrichtung zum Aufbringen einer Klebefolie auf die Oberfläche eines Bauteils;
- Fig. 4: Schnittansicht durch eine Behandlungshaube als Bestandteil einer erfindungsgemäßen Vorrichtung zum Aufbringen einer Klebefolie auf die Oberfläche eines Bauteils; und
- Fig. 5: Seitenansicht der Behandlungshaube aus Fig. 4 an einem Roboterarm.

### DETAILLIERTE BESCHREIBUNG DER AUSFÜHRUNGSBEISPIELE

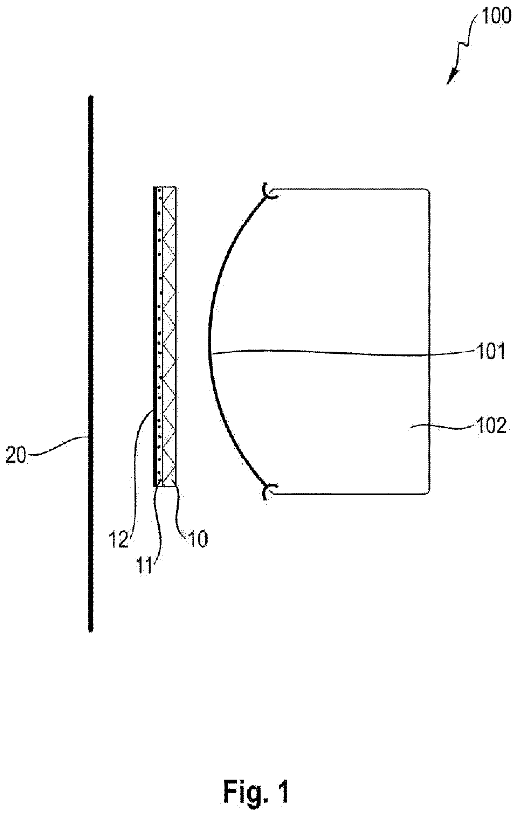

**Fig. 1** zeigt in schematischer Schnittansicht eines Teils einer Vorrichtung 100 zum Aufbringen einer Klebefolie 10 auf die Oberfläche 20 eines Bauteils. Die Klebefolie 10 ist auf der dem Bauteil zugewandten Seite mit einer Klebeschicht 11 versehen. Gemäß dem erfindungsgemäßen Verfahren wurde die Klebeschicht 11 einer physikalischen Oberflächenaktivierung unterzogen und anschließend mit Wasserdampf befeuchtet, so dass sich ein Wasserfilm 12 auf der Klebeschicht 11 ausgebildet hat.

Bei der hier nicht näher dargestellten Einrichtung zur physikalischen Oberflächenaktivierung der Vorrichtung 100 handelt es sich vorzugsweise um eine Plasmabehandlungseinrichtung. Die Plasmabehandlung erfolgt vorzugsweise im Vakuum, sodass weiterhin eine Evakuierungseinrichtung vorgesehen ist. Alternativ kann eine Coronabehandlungseinrichtung oder eine Flammbehandlungseinrichtung vorgesehen sein.

Zur Erzeugung des Wasserfilms 12 umfasst die Vorrichtung 100 eine hier nicht näher gezeigte Vernebelungseinrichtung, vorzugsweise einen Ultraschallvernebler oder eine Sprühpistole oder eine vergleichbare Spritzeinheit.

Zum Anpressen der auf der kleberseitigen Seite oberflächenaktivierten und befeuchteten Klebefolie 10 ist eine auslenkbare, elastische Membran 101 vorgesehen. Auf der von der Klebefolie 10 abgewandten Seite der elastischen Membran 101 ist eine Überdruckkammer 102 vorgesehen. Durch hier nicht näher dargestellte Mittel zur Erzeugung eines Überdrucks in der Überdruckkammer 102 wird der Überdruck erzeugt (Überdruck: > 1 bar). Der Überdruck lenkt die elastische Membran 101 in Richtung der Oberfläche 20 des Bauteils aus, indem sich die elastische Membran 101 konvex vorwölbt. Bei der hier nicht näher dargestellten weiteren konvexen Vorwölbung der elastischen Membran 101 in Richtung der Oberfläche 20 des Bauteils wird die dazwischenliegende Klebefolie 10 zunehmend gegen die Oberfläche 20 des Bauteils gedrückt, wodurch es zu einer Anhaftung der Klebefolie 10 mittels der oberflächenaktivierten und befeuchteten Klebeschicht 11 auf der Oberfläche 20 des Bauteils kommt.

Für die Oberflächenaktivierung und die Befeuchtung der Klebeschicht 11 der Klebefolie 10 kann zunächst eine Aufnahme der Klebefolie 10 in dieser Figur nicht näher dargestellte Behandlungshaube vorgesehen sein, wobei die Klebeschicht 11 der Klebefolie 10 zur offenen Seite der Behandlungshaube ausgerichtet ist. Zur Aufnahme der Klebefolie 10 in die Behandlungshaube kann eine Trägerfolie vorgesehen sein, an der die Klebefolie mit der der Klebeschicht abgewandten Seite anhaftet. Hierbei wird zunächst die Klebefolie 10 an der Trägerfolie angebracht und dann wird die Trägerfolie in die Behandlungshaube eingesetzt. Die Behandlungshaube mit der Klebefolie 10 wird an einer Plasmaerzeugungseinheit, die insbesondere eine entsprechende Platte mit Elektrode umfasst, positioniert. In dem nun geschlossenen Raum der Behandlungshaube erfolgt eine Evakuierung zur Erzeugung eines Vakuums im Inneren der Behandlungshaube, sodass die erfindungsgemäß vorgesehene Plasmabehandlung der Klebeschicht 11 erfolgen kann. Anschließend kann die Behandlungshaube mit der darin befindlichen Klebefolie mit der oberflächenaktivierten Klebeschicht an einer hier nicht dargestellten Befeuchtungsstation positioniert werden, in der mittels einer Vernebelungseinrichtung, insbesondere mit einem Ultraschallvernebler, eine Befeuchtung der oberflächenaktivierten Klebeschicht 11 erfolgt.

Anschließend kann die Behandlungshaube mit der darin befindlichen Klebefolie 10 mit der oberflächenaktivierten und befeuchteten Klebeschicht 11 an dem zu beklebenden Bauteil, beispielsweise an einer Kraftfahrzeugkarosserie, positioniert werden. Das Anpressen der Klebefolie 10 auf der Oberfläche 20 des zu beklebenden Bauteils erfolgt dann insbesondere mittels der beschriebenen elastischen Membran 101, wobei sich die Klebefolie 10 von der gegebenenfalls vorgesehenen Trägerfolie ablöst. Nun kann die Behandlungshaube in einer Auswurfstation zum Entfernen der Trägerfolie positioniert werden. Nach dem Entfernen der Trägerfolie steht die Behandlungshaube für einen erneuten Durchgang wieder zur Verfügung.

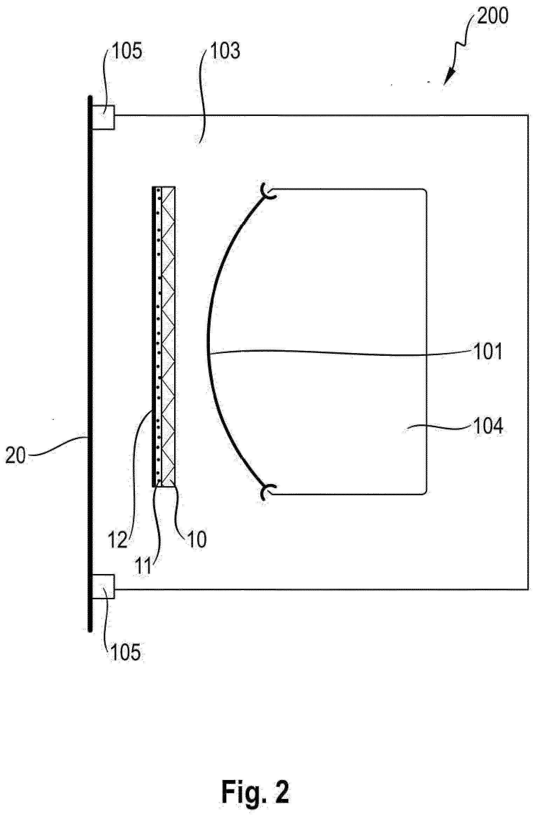

**Fig. 2** zeigt eine weitere bevorzugte Ausgestaltung eines Teils einer Vorrichtung 200 zum Aufbringen einer Klebefolie 10 mit einer Klebeschicht 11 auf die Oberfläche 20 eines Bauteils. Auch hier erfolgt das Anpressen der Klebefolie 10 auf der Oberfläche 20 des Bauteils mittels einer auslenkbaren, elastischen Membran 101. Im Unterschied zu der Ausgestaltung der Vorrichtung in Fig. 1 ist bei der in Fig. 2 gezeigten Vorrichtung 200 zwischen der auslenkbaren elastischen Membran 101 und der Oberfläche 20 des Bauteils ein als Unterdruckkammer ausgebildeter Raum 103 vorgesehen. Die Druckdichtigkeit der Unterdruckkammer 103 wird durch Dichtungen 105 gewährleistet, wobei diese Dichtungen 105 die Begrenzungen der Unterdruckkammer 103 gegenüber der Oberfläche 20 des Bauteils abdichten.

Zum Anpressen der Klebefolie 10 auf der Oberfläche 20 des Bauteils wird in der Unterdruckkammer 103 ein Unterdruck angelegt, wobei vorzugsweise eine Evakuierung zur Erzeugung eines Vakuums durch hier nicht näher dargestellte Mittel erfolgt. In dem Raum 104, der sich auf der anderen Seite der Membran 101 befindet, herrscht weiterhin atmosphärischer Druck, so dass durch die Druckdifferenz zwischen dem Raum 104 und der Unterdruckkammer 103 eine Auslenkung der elastischen Membran 101 in Richtung der Oberfläche 20 des Bauteils bewirkt wird. Durch diese Auslenkung der Membran 101 wird die Klebefolie 10 mit der daran befindlichen oberflächenaktivierten und befeuchteten Klebeschicht 11 voran gegen die Oberfläche 20 des Bauteils gepresst.

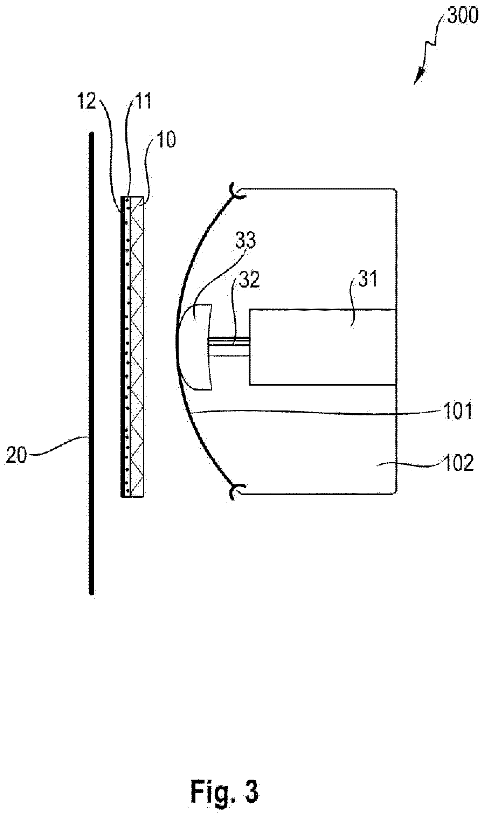

**Fig. 3** zeigt in einer schematischen Schnittansicht eine weitere, besonders bevorzugte Ausführungsform eines Teils einer erfindungsgemäßen Vorrichtung 300 zum Aufbringen einer Klebefolie 10 mit einer Klebeschicht 11 auf die Oberfläche 20 eines Bauteils. In entsprechender Weise wie bei den in Fig. 1 und in Fig. 2 gezeigten Ausführungsformen ist auch hier die Klebeschicht 11 der Klebefolie 10 einer physikalischen Oberflächenaktivierung und einer Befeuchtung zur Ausbildung eines Wasserfilms 12 auf der Klebeschicht 11 der Klebefolie 10 ausgesetzt worden. Die Ausführungsform der Vorrichtung 300 entspricht in weiten Teilen der in Fig. 1 gezeigten Ausführungsform 100, wobei hier in entsprechender Weise eine auslenkbare Membran 101 vorgesehen ist, die mittels eines Überdrucks in der Überdruckkammer 102 in Richtung der Oberfläche 20 des Bauteils auslenkbar ist und hierdurch eine Anpressung der Klebefolie 10 mit der Klebeschicht 11 voran an die Oberfläche 20 des Bauteils bewirkt. Zusätzlich ist in dieser Ausführungsform ein Stempelmittel mit einem betätigbaren Zylinder 31, einem ausfahrbaren Kolben 32 und einem Stempelkopf 33 vorgesehen. Mittels dieses Stempelmittels kann die Klebefolie 10 gezielt punktuell über die dazwischenliegende Membran 101 gegen die Oberfläche 20 des Bauteils gedrückt werden. Hierdurch wird vor allem erreicht, dass eine von einem zentralen Ausgangspunkt gleichmäßig radial nach außen laufende Anlegung der oberflächenaktivierten und befeuchteten Klebeschicht 11 der Klebefolie 10 auf der Oberfläche 20 des Bauteils erfolgt. Hierdurch wird eine besonders gleichmäßige und zuverlässige Aufbringung der Klebefolie 10 erleichtert.

In ähnlicher Weise kann ein solches Stempelmittel 31, 32, 33 auch für solche Vorrichtungen eingesetzt werden, bei denen die Klebefolie 10 mittels eines Unterdrucks auf die Oberfläche 20 eines Bauteils aufgebracht wird, beispielsweise bei der Vorrichtung 200 der Fig. 2. Bei solchen Ausgestaltungen für die Aufbringung der Klebefolie 10 kann es insbesondere bei besonders druckempfindlichen Bauteilen passieren, dass durch den angelegten Unterdruck eine Verformung des Bauteils auftritt, insbesondere eine Vorwölbung in Richtung der Vorrichtung 200. Einer solchen Vorwölbung kann durch ein entsprechend ausgefahrenes Stempelmittel 31, 32, 33 entgegengewirkt werden, so dass das Stempelmittel zusätzlich zur Stabilisierung eines druckempfindlichen und gegebenenfalls besonders flexiblen Bauteils dient.

Es ist besonders bevorzugt, dass der Vorschub des Stempelmittels 31, 32, 33 und das Einstellen der Druckdifferenz, insbesondere das Einstellen eines Unterdrucks, zeitlich parallel erfolgen. Hierbei wird zweckmäßigerweise berücksichtigt, dass bei druckempfindlichen Bauteilen gleich zu Beginn der Evakuierung gegebenenfalls eine Verformung einsetzen kann, so dass vorteilhafterweise gleich zu Beginn der Evakuierung das Stempelmittel31, 32, 33 bis zum Kontakt mit dem Bauteil ausgefahren wird.

In bevorzugter Weise erfolgt ein Vorschub des Stempelkopfes 33 in Koordination mit der Einstellung des Unterdrucks. Mit anderen Worten werden in bevorzugter Weise die Einstellung der Druckdifferenz, die zu einer Auslenkung der elastischen Membran 101 führt, und der Vorschub des Stempelmittels 31, 32, 33 aufeinander abgestimmt. Die Koordination des Vorschubs des Stempelkopfes 33 mit der Einstellung des Unterdrucks kann insbesondere durch zeitliche Abstimmung oder in Abhängigkeit von dem sich tatsächlich einstellenden Unterdruck erfolgen. In besonders bevorzugter Weise erfolgt der Vorschub des Stempelmittels 31, 32, 33 in gesteuerter oder geregelter Form. Die Betätigung des Stempelmittels wird dabei insbesondere so ausgelegt, dass die in Folge der Druckdifferenz bei dem Prozess der Aufbringung der Klebefolie 10 auf das Bauteil wirkende Kraft kompensiert wird und es also zu einem Kräfteausgleich kommt.

Es kann vorgesehen sein, dass das Ausfahren des Stempelmittels 31, 32, 33 zeitabhängig erfolgt. Beispielsweise kann nach Ablauf von einigen Sekunden oder nach Ablauf eines vorgebbaren Zeitintervalls, z. B. nach 2 s oder 3 s oder 4 s oder 5 s, nach dem Start einer Evakuierung das Stempelmittel 31, 32, 33 ausgefahren werden.

In anderen Ausgestaltungen kann das Ausfahren des Stempelmittels 31, 32, 33 in Abhängigkeit von einem tatsächlichen gemessenen, auf die Membran 101 wirkenden Drucks erfolgen, also insbesondere bei Unterschreiten einer vorgebbaren Druckschwelle beim Einstellen des Unterdrucks. In dieser Ausführungsform können mit Vorteil ein oder mehrere Drucksensoren eingesetzt werden. So kann beispielsweise bei einem erreichten Druck von 100 mbar oder einer anderen Druckschwelle das Stempelmittel 31, 32, 33 ausgefahren werden. Eine derartige Regelung kann insbesondere auch auf die Eigenschaften des zu beklebenden Bauteils abgestimmt werden und insbesondere in Abhängigkeit von der Druckempfindlichkeit des jeweiligen Bauteils angepasst werden.

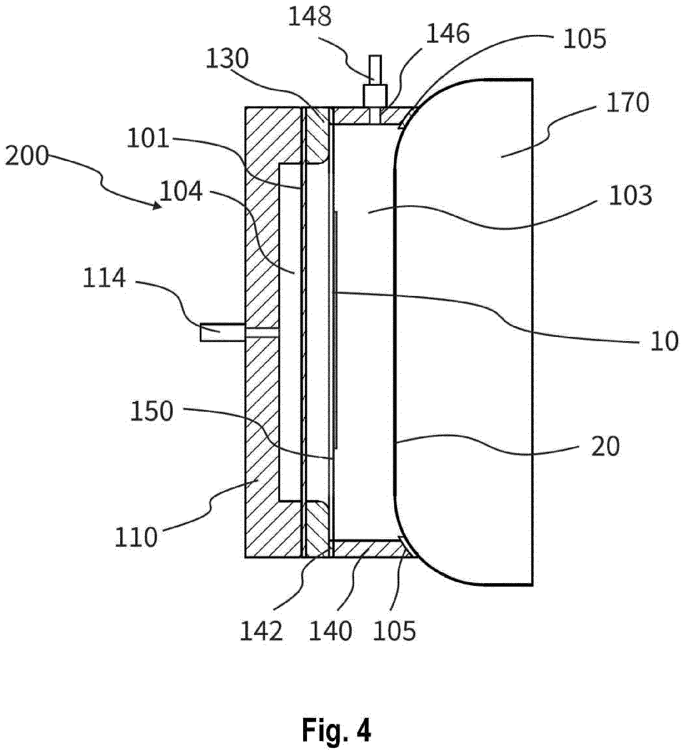

**Fig. 4** zeigt eine Seitenansicht einer Behandlungshaube 200, die vom prinzipiellen Aufbau her der Vorrichtung 200 aus Fig. 2 entspricht. Entsprechende Elemente sind daher mit den gleichen Bezugszeichen versehen. Mit Hilfe der Behandlungshaube 200 kann die Klebefolie 10 beispielsweise auf eine lackierte Oberfläche 20 eines Kraftfahrzeugs aufgebracht werden.

Die Behandlungshaube 200 umfasst einen rechteckigen Rahmen, der sich aus einem rechteckigen Teilrahmen 130 und einem rechteckigen Teilrahmen 140 zusammensetzt. Die Teilrahmen 130 und 140 sind luftdicht über eine Dichtung 142 verbunden. In dem Teilrahmen 130 ist eine Trägerfolie 150 beispielsweise mittels mehrerer Stifte fixiert. Hierfür kann die Trägerfolie 150 mehrere dazu korrespondierende Löcher aufweisen, in die die Stifte eingeschoben werden können.

Parallel zu der Trägerfolie 150 ist die elastische Membran 101 angeordnet, die beispielsweise aus Naturkautschuk gebildet ist. Sie ist zwischen einer Basisplatte 110 der Behandlungshaube 200 und dem Teilrahmen 130 luftdicht eingespannt. Sie verschließt die durch den Teilrahmen 130 definierte Öffnung des Rahmens. Hierzu sind beispielsweise mehrere Schrauben durch den Teilrahmen 130 in die Basisplatte 110 geschraubt. Die Basisplatte 110 schließt mit der elastischen Membran 101 die Druckausgleichskammer 104 ein. Über ein Ventil 114 kann Luft in die Druckausgleichskammer 104 eingelassen werden.

Der aus den Teilrahmen 130 und 140 bestehende Rahmen ist dazu ausgebildet, gemeinsam mit der zu beklebenden Oberfläche 20 des Bauteils 170 und der elastischen Membran 101 die Unterdrucckammer 103 zu bilden, in der die Trägerfolie 150 einschließlich der Klebefolie 10 angeordnet ist und in welche sich die elastische Membran 101 wölben kann, wenn die Unterdruckkammer 103 mit einem Unterdruck beaufschlagt wird. Der Teilrahmen 140 ist zu diesem Zweck auf die Geometrie der Oberfläche 20 angepasst, so dass ein formschlüssiger Kontakt zwischen der Oberfläche 20 und dem Teilrahmen 140 der Behandlungshaube 200 gewährleistet ist. An den Rändern der durch den Teilrahmen 140 definierten Öffnung des Rahmens ist das elastische Dichtelement 105 fixiert. Über dieses ist der Rahmen dichtend mit der Oberfläche 20 verbunden. Über einen mit einer Unterdruckquelle gekoppelten Anschluss 148 und den durch den Teilrahmen 140 geführten Kanal 146 kann die Unterdruckkammer 103 evakuiert werden. In dem hier gezeigten Zustand ist die elastische Membran 101 nicht gewölbt, was bedeutet, dass in der Druckausgleichskammer 104 und in der Unterdrucckammer 103 der gleiche Druck herrscht.

Zur Auslenkung der elastischen Membran 101 wird eine Druckdifferenz zwischen der Unterdrucckammer 103 und der Druckausgleichskammer 104 erzeugt, wobei in der Druckausgleichskammer 104 der höhere Druck eingestellt wird. Dies kann insbesondere dadurch erreicht werden, dass zunächst sowohl die Unterdruckkammer 103 als auch die Druckausgleichskammer 104 evakuiert werden. Anschließend wird die Druckausgleichskammer 104 über das Ventil 114 belüftet, sodass sich der Druck in der Druckausgleichskammer 104 wieder dem atmosphärischen Druck annähert. Hierdurch wölbt sich die elastische Membran 101 in Richtung der Oberfläche 20 des Bauteils 170 und drückt damit die erfindungsgemäß oberflächenaktivierte und befeuchtete Klebefolie 10 auf die Oberfläche 20 des Bauteils.

Nachdem das Anpressen der Klebefolie 10 an die Oberfläche 20 des Bauteils 170 abgeschlossen ist, können die Unterdruckkammer 103 und die Druckausgleichskammer 104 vollständig belüftet werden. Die elastische Membran 101 kann dann wieder in den Ausgangszustand zurückkehren. In der Regel wird dabei die Trägerfolie 150 von der Klebefolie 10 abgezogen und die Klebefolie 10 verbleibt auf der Oberfläche 20.

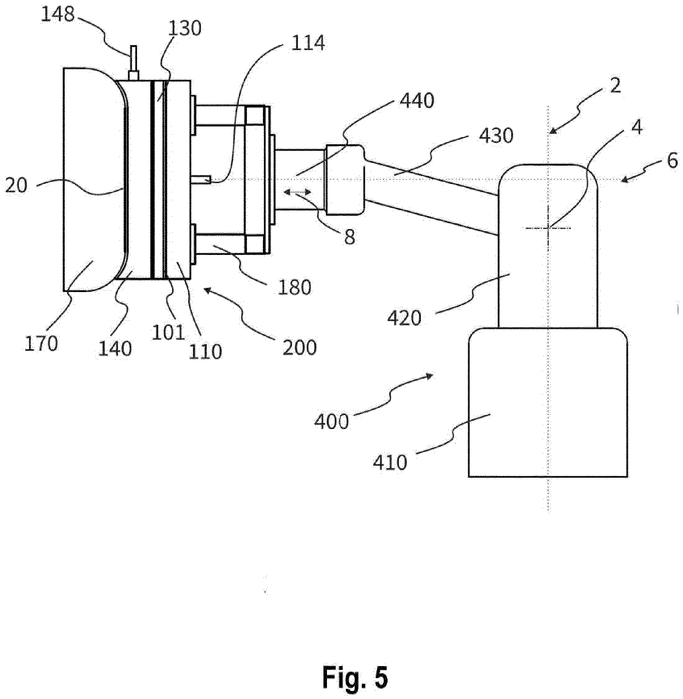

**Fig. 5** zeigt eine Ausführungsform der erfindungsgemäßen Vorrichtung, bei der die Behandlungshaube 200 über eine Unterkonstruktion 180, die sich auf einer Seite der Basisplatte 110 der Behandlungshaube 200 befindet, an einem Roboterarm 430 oder allgemein einem Hubwerkzeug eines automatisierten Systems 400 gekoppelt ist. Das automatisierte System 400 verfügt über eine Basis 410 mit einem schwenkbaren Oberteil 420. Das Oberteil 420 kann sich um eine Drehachse 2 frei drehen. Der Roboterarm 430 kann um eine Schwenkachse 4 geschwenkt werden. Dies ermöglicht eine Höhenjustierung der Behandlungshaube 200.

Zwischen dem Roboterarm 430 und der Behandlungshaube 200 ist ein Schubzylinder 440 angeordnet. Der Schubzylinder 440 ist linear entlang einer Verlagerungsrichtung 8 expandierbar. Zusätzlich kann der Schubzylinder 440 um eine Rotationsachse 6 gedreht werden. Somit kann ein genauer Abstand und Ausrichtung zwischen der Behandlungshaube 200 und der Oberfläche 20 des Bauteils eingestellt werden.

Mit Hilfe des automatisierten Systems 400 kann die Behandlungshaube 200 mit der darin befindlichen Klebefolie 10 verschiedene Stationen durchlaufen, um die erläuterten Schritte zur Oberflächenaktivierung und zur Befeuchtung der Klebeschicht 11 der Klebefolie 10 durchzuführen. Bezüglich der verschiedenen Stationen der Behandlungshaube, insbesondere einer Evakuierungseinrichtung und einer Plasmabehandlungseinrichtung sowie einer Befeuchtungseinrichtung wird auch auf die Beschreibung zu Fig. 1 verwiesen.

## Patentansprüche

1. Verfahren zum Aufbringen einer Klebefolie (10) auf die Oberfläche (20) eines Bauteils mit den folgenden Schritten:
a. Es wird eine physikalische Oberflächenaktivierung einer Klebeschicht (11) einer Klebefolie (10) durchgeführt.
b. Die Klebeschicht (11) der Klebefolie (10) wird befeuchtet.
c. Die oberflächenaktivierte und befeuchtete Klebefolie (10) wird mit einer zu beklebenden Oberfläche (20) eines Bauteils in Kontakt gebracht.

2. Verfahren nach Anspruch 1 mit mindestens einem der folgenden zusätzlichen Merkmale:
a. Die physikalische Oberflächenaktivierung der Klebeschicht (11) erfolgt durch eine Plasmabehandlung.
b. Die physikalische Oberflächenaktivierung der Klebeschicht (11) erfolgt durch eine Coronabehandlung.
c. Die physikalische Oberflächenaktivierung der Klebeschicht (11) erfolgt durch eine Flammbehandlung.
d. Die physikalische Oberflächenaktivierung der Klebeschicht (11) erfolgt in einem Vakuum.

3. Verfahren nach Anspruch 1 oder Anspruch 2 mit dem folgenden zusätzlichen Merkmal:
a. Das Befeuchten der Klebeschicht (11) erfolgt durch Vernebelung von Wasser.

4. Verfahren nach einem der vorhergehenden Ansprüche mit dem folgenden zusätzlichen Merkmal:
a. Das Inkontaktbringen der Klebefolie (10) mit der zu beklebenden Oberfläche (20) erfolgt initial durch punktuelles Anpressen der Klebefolie auf der zu beklebenden Oberfläche.

5. Verfahren nach einem der vorhergehenden Ansprüche mit dem folgenden zusätzlichen Merkmal:
a. Das Inkontaktbringen der Klebefolie (10) mit der zu beklebenden Oberfläche (20) erfolgt unter Verwendung einer elastischen Membran (101), die zum Anpressen der Klebefolie auf der zu beklebenden Oberfläche auslenkbar ist.

6. Verfahren nach Anspruch 5 mit dem folgenden zusätzlichen Merkmal:
a. Die Auslenkung der Membran (101) erfolgt durch Erzeugen eines Unterdrucks, insbesondere eines Vakuums, in einem Raum (103) zwischen der elastischen Membran (101) und der Oberfläche (20) des Bauteils.

7. Vorrichtung (100; 200; 300) zum Aufbringen einer Klebefolie (10) auf eine Oberfläche (20) eines Bauteils, insbesondere zur Durchführung eines Verfahren gemäß einem der Ansprüche 1 bis 6, mit den folgenden Merkmalen:
a. Die Vorrichtung umfasst eine Einrichtung zur Aufnahme einer Klebefolie (10) mit einer Klebeschicht (11).
b. Die Vorrichtung umfasst eine Einrichtung zur physikalischen Oberflächenaktivierung der Klebeschicht (11) der Klebefolie (10).
c. Die Vorrichtung umfasst eine Einrichtung zur Befeuchtung der Klebeschicht (11) der Klebefolie (10).
d. Die Vorrichtung umfasst eine Einrichtung zum Inkontaktbringen der oberflächenaktivierten und befeuchteten Klebefolie (10) mit der zu beklebenden Oberfläche (20) des Bauteils.

8. Vorrichtung nach Anspruch 7 mit mindestens einem der folgenden zusätzlichen Merkmale:
a. Die Einrichtung zur Oberflächenaktivierung der Klebeschicht (11) umfasst eine Einrichtung zur Erzeugung eines Plasmas.
b. Die Einrichtung zur Oberflächenaktivierung der Klebeschicht (11) umfasst eine Einrichtung zur Coronabehandlung.
c. Die Einrichtung zur Oberflächenaktivierung der Klebeschicht (11) umfasst eine Einrichtung zur Flammbehandlung.
d. Die Einrichtung zur Oberflächenaktivierung der Klebeschicht (11) umfasst eine Einrichtung zur Erzeugung eines Vakuums.

9. Vorrichtung nach Anspruch 7 oder Anspruch 8 mit dem folgenden zusätzlichen Merkmal:
a. Die Einrichtung zur Befeuchtung der Klebeschicht (11) umfasst eine Verneblungseinrichtung, insbesondere einen Wasservernebler.

10. Vorrichtung nach einem der Ansprüche 7 bis 9 mit mindestens einem der folgenden zusätzlichen Merkmale:
a. Die Einrichtung zum Inkontaktbringen der Klebefolie (10) mit der zu beklebenden Oberfläche (20) umfasst eine auslenkbare elastische Membran (101) zum Anpressen der Klebefolie auf der zu beklebenden Oberfläche des Bauteils.
b. Die Einrichtung zum Inkontaktbringen der Klebefolie (10) mit der zu beklebenden Oberfläche (20) umfasst mindestens ein Stempelmittel (31, 32, 33) zum punktuellen Inkontaktbringen der Klebefolie mit der zu beklebenden Oberfläche.

11. Vorrichtung nach Anspruch 10 mit dem folgenden zusätzlichen Merkmal:
a. Die Einrichtung zum Inkontaktbringen der Klebefolie (10) mit der zu beklebenden Oberfläche (20) umfasst eine Einrichtung zur Erzeugung eines Unterdrucks in einem Raum (103) zwischen der elastischen Membran (101) und der Oberfläche (20) des Bauteils zur Auslenkung der elastischen Membran.

## Claims

1. Method of applying an adhesive film (10) to the surface (20) of a component, having the following steps:
a. A physical surface activation of an adhesive layer (11) of an adhesive film (10) is carried out.
b. The adhesive layer (11) of the adhesive film (10) is moistened.
c. The surface-activated and moistened adhesive film (10) is brought into contact with a surface (20) of a component to which the adhesive film is to be applied.

2. The method according to claim 1 having at least one of the following additional features:
a. The physical surface activation of the adhesive layer (11) is carried out by a plasma treatment.
b. The physical surface activation of the adhesive layer (11) is carried out by a corona treatment.
c. The physical surface activation of the adhesive layer (11) is carried out by means of a flame treatment.
d. Physical surface activation of the adhesive layer (11) is carried out in a vacuum.

3. The method according to claim 1 or claim 2 having the following additional feature:
a. The moistening of the adhesive layer (11) is carried out by nebulizing water.

4. The method according to any one of the preceding claims having the following additional feature:
a. The bringing into contact of the adhesive film (10) with the surface (20) to which the adhesive film is to be applied is carried out initially by pressing the adhesive film onto the surface to which the adhesive film is to be applied in a punctual manner.

5. The method according to any one of the preceding claims having the following additional feature:
a. The bringing into contact of the adhesive film (10) with the surface (20) to which the adhesive film is to be applied is carried out using an elastic membrane (101) which can be deflected to press the adhesive film onto the surface to which the adhesive film is to be applied.

6. The method according to claim 5 having the following additional feature:
a. The deflection of the membrane (101) is carried out by generating a negative pressure, in particular a vacuum, in a space (103) between the elastic membrane (101) and the surface (20) of the component.

7. Apparatus (100; 200; 300) for applying an adhesive film (10) to a surface (20) of a component, in particular for carrying out a method according to any one of claims 1 to 6, having the following features:
a. The apparatus comprises a device for receiving an adhesive film (10) having an adhesive layer (11).
b. The apparatus comprises a device for physical surface activation of the adhesive layer (11) of the adhesive film (10).
c. The apparatus comprises a device for moistening the adhesive layer (11) of the adhesive film (10).
d. The apparatus comprises a device for bringing the surface-activated and moistened adhesive film (10) into contact with the surface (20) of the component to which the adhesive film is to be applied.

8. The apparatus of claim 7, having at least one of the following additional features:
a. The device for surface activation of the adhesive layer (11) comprises a device for generating a plasma.
b. The device for surface activation of the adhesive layer (11) comprises a device for corona treatment.
c. The device for surface activation of the adhesive layer (11) comprises a device for flame treatment.
d. The device for surface activation of the adhesive layer (11) comprises a device for generating a vacuum.

9. The device of claim 7 or claim 8, having the following additional feature:
a. The device for moistening the adhesive layer (11) comprises a nebulizing device, in particular a water nebulizer.

10. The device of any one of claims 7 to 9, having at least one of the following additional features:
a. The device for bringing the adhesive film (10) into contact with the surface (20) to which the adhesive film is to be applied comprises a deflectable elastic membrane (101) for pressing the adhesive film onto the surface of the component to which the adhesive film is to be applied.
b. The device for bringing the adhesive film (10) into contact with the surface (20) to which the adhesive film is to be applied comprises at least one stamping means (31, 32, 33) for bringing the adhesive film into punctual contact with the surface to which the adhesive film is to be applied.

11. The device according to claim 10, having the following additional feature:
a. The device for bringing the adhesive sheet (10) into contact with the surface (20) to which the adhesive film is to be applied comprises means for generating a negative pressure in a space (103) between the elastic membrane (101) and the surface (20) of the component for deflecting the elastic membrane.

## Revendications

1. Procédé d'application d'un film adhésif (10) sur la surface (20) d'un composant avec les étapes suivantes :
a. Une activation physique en surface d'une couche adhésive (11) d'un film adhésif (10) est réalisée.
b. La couche adhésive (11) du film adhésif (10) est humidifiée.
c. Le film adhésif (10) activé en surface et humidifié est mis en contact avec une surface (20) à coller d'un composant.

2. Procédé selon la revendication 1 avec au moins l'une des caractéristiques supplémentaires suivantes :
a. L'activation physique en surface de la couche adhésive (11) s'effectue par un traitement au plasma.
b. L'activation physique en surface de la couche adhésive (11) s'effectue par un traitement corona.
c. L'activation physique en surface de la couche adhésive (11) s'effectue par un traitement à la flamme.
d. L'activation physique en surface de la couche adhésive (11) s'effectue sous vide.

3. Procédé selon la revendication 1 ou la revendication 2 avec la caractéristique supplémentaire suivante :
a. L'humidification de la couche adhésive (11) s'effectue par pulvérisation de brouillard d'eau.

4. Procédé selon l'une quelconque des revendications précédentes avec la caractéristique supplémentaire suivante :
a. La mise en contact du film adhésif (10) avec la surface (20) à coller s'effectue initialement par pression ponctuelle du film adhésif sur la surface à coller.

5. Procédé selon l'une quelconque des revendications précédentes avec la caractéristique supplémentaire suivante :
a. La mise en contact du film adhésif (10) avec la surface (20) à coller s'effectue à l'aide d'une membrane élastique (101) qui peut être déviée pour presser le film adhésif sur la surface à coller.

6. Procédé selon la revendication 5 avec la caractéristique supplémentaire suivante :
a. La déviation de la membrane (101) s'effectue par production d'une pression négative, notamment un vide, dans un espace (103) entre la membrane élastique (101) et la surface (20) du composant.

7. Dispositif (100 ; 200 ; 300) d'application d'un film adhésif (10) sur une surface (20) d'un composant, notamment de mise en œuvre d'un procédé selon l'une quelconque des revendications 1 à 6, avec les caractéristiques suivantes :
a. Le dispositif comprend un appareil pour recevoir un film adhésif (10) avec une couche adhésive (11).
b. Le dispositif comprend un appareil d'activation physique en surface de la couche adhésive (11) du film adhésif (10).
c. Le dispositif comprend un appareil d'humidification de la couche adhésive (11) du film adhésif (10).
d. Le dispositif comprend un appareil de mise en contact du film adhésif (10) activé en surface et humidifié avec la surface (20) à coller du composant.

8. Dispositif selon la revendication 7 avec au moins l'une des caractéristiques supplémentaires suivantes :
a. L'appareil d'activation en surface de la couche adhésive (11) comprend un appareil de production d'un plasma.
b. L'appareil d'activation en surface de la couche adhésive (11) comprend un appareil de traitement corona.
c. L'appareil d'activation en surface de la couche adhésive (11) comprend un appareil de traitement à la flamme.
d. L'appareil d'activation en surface de la couche adhésive (11) comprend un appareil de production d'un vide.

9. Dispositif selon la revendication 7 ou la revendication 8 avec la caractéristique supplémentaire suivante :
a. L'appareil d'humidification de la couche adhésive (11) comprend un appareil de pulvérisation de brouillard, notamment un pulvérisateur de brouillard d'eau.

10. Dispositif selon l'une quelconque des revendications 7 à 9 avec au moins l'une des caractéristiques supplémentaires suivantes :
a. L'appareil de mise en contact du film adhésif (10) avec la surface (20) à coller comprend une membrane élastique (101) pouvant dévier pour presser le film adhésif sur la surface à coller du composant.
b. L'appareil de mise en contact du film adhésif (10) avec la surface (20) à coller comprend au moins un moyen de poinçonnage (31, 32, 33) pour la mise en contact ponctuelle du film adhésif avec la surface à coller.

11. Dispositif selon la revendication 10 avec la caractéristique supplémentaire suivante :
a. L'appareil de mise en contact du film adhésif (10) avec la surface (20) à coller comprend un appareil de production d'une pression négative dans un espace (103) entre la membrane élastique (101) et la surface (20) du composant pour la déviation de la membrane élastique.
